# FASCICULE DE BREVET EUROPEEN

(11) **EP 3 520 453 B1**
(45) Date de publication et mention de la délivrance du brevet: **22.07.2026**
(21) Numéro de dépôt: 17780842.5
(22) Date de dépôt: 26.09.2017
(51) Int. Cl.: H04W 12/30, H04W 12/45, H04W 12/08, H04W 12/04, H04W 8/20

(54) **GESTION D'UNE OFFRE MULTI-SIM A CODES D'ACTIVATION MULTIPLES**
VERWALTUNG EINES MULTI-SIM-ANGEBOTS MIT MEHREREN AKTIVIERUNGSCODES
MANAGEMENT OF A MULTI-SIM OFFER WITH MULTIPLE ACTIVATION CODES

(30) Priorité: 29.09.2016 FR 1659317
(43) Date de publication de la demande: 07.08.2019
(73) Titulaire: Orange, 92130 Issy-les-Moulineaux (FR)
(72) Inventeur: SCHOULER, Eric, 92326 Châtillon Cedex (FR)
(74) Mandataire: Plasseraud IP
(86) Numéro de dépôt international: PCT/FR2017/052580
(87) Numéro de publication internationale: WO 2018/060583

(56) Documents cités:
- EP-A1- 2 461 613
- US-A1- 2016 044 495
- US-A1- 2016 241 537
- SANZ YOLANDA ET AL: "GSM Association Non-confidential Official Document SGP.22 -RSP Technical Specification RSP Technical Specification Security Classification: Non-confidential Copyright Notice (Test) GSM Association Non-confidential Official Document SGP.22 -RSP Technical Specification", 9 June 2016 (2016-06-09), pages 1 - 125, XP055866106, Retrieved from the Internet <URL:https://www.gsma.com/newsroom/wp-content/uploads/SGP.22_v1.1.pdf> [retrieved on 20211125]

## Description

La présente invention concerne la gestion du processeur de sécurité d'un ou plusieurs terminaux de télécommunication.

Un tel processeur de sécurité est communément appelé « carte SIM » pour « Subscriber Identity Module ».

Il existe des offres dites « multi-SIM » permettant à des clients d'opérateur de bénéficier d'un contrat unique tout en autorisant plusieurs terminaux à être associés à ce contrat. Les offres multi-SIM impliquent alors de fournir plusieurs cartes SIM pour un même contrat. D'une part, les clients n'ont ainsi plus besoin d'extraire leur processeur SIM d'un terminal afin de l'insérer dans un autre terminal devant être utilisé. D'autre part, plusieurs terminaux peuvent être actifs simultanément.

Par ailleurs, de plus en plus de terminaux ne comportent pas directement un processeur de sécurité physique, de type carte SIM, mais plutôt un processeur de sécurité sous la forme d'un module logiciel directement implanté dans le terminal. Il s'agit de cartes SIM dites « électroniques » (en anglais « embedded SIM ») ou eSIM, qui sont dans la majorité des cas « soudées » aux terminaux. L'utilisation de modules eSIM, de plus en plus fréquente, nécessite l'adaptation des offres multi-SIM et plus particulièrement de fournir non plus plusieurs cartes SIM physiques mais plusieurs profils, chacun devant être téléchargé par le client. Les documents US-2016044495 et US 10,200,853B abordent ces thématiques de chargement de profils sur terminal. Or, la nécessité de télécharger les profils amène le client à opérer cette demande en échappant au contrôle de l'opérateur et, sans contrôle *ad hoc,* les clients peuvent demander par erreur des téléchargements incohérents.

La présente invention vient améliorer la situation.

Elle propose à cet effet un procédé, selon la revendication 1 mis en œuvre par un serveur de contrôle, de configuration d'un module de sécurité associé à un terminal de télécommunication, dans lequel le serveur de contrôle attribue un ensemble de N codes d'activation correspondant à une souscription comprenant une pluralité de N profils à attribuer à un ensemble de N terminaux respectifs. Le procédé comporte alors les étapes:
a) après activation d'un premier code auprès d'un premier terminal, attribuer un profil au premier terminal et enregistrer une association du profil attribué au premier terminal,
b) pour une nouvelle demande d'attribution d'un profil courant à un terminal courant, attribuer le profil courant au terminal courant si :
   - aucune association de ce terminal courant à un profil n'est enregistrée, et
   - aucune association de ce profil courant à un terminal n'est enregistrée
et enregistrer l'association du profil courant au terminal courant.

Ainsi, un client ayant souscrit notamment une offre multi-SIM ne peut pas utiliser plusieurs fois le même code d'activation pour l'attribution d'un profil à deux terminaux différents, ou inversement attribuer un nouveau profil à l'un de ses terminaux ayant déjà reçu un profil (sauf à désassocier le profil précédent de ce terminal, comme on le verra plus loin).

Ainsi, dans une forme de réalisation, la souscription comprenant une pluralité de N profils à attribuer à un ensemble de N terminaux respectifs est relative à une offre de type multi-SIM.

Le procédé peut comporter, préalablement à l'étape a), l'enregistrement de N profils et N codes d'activation, en association avec ladite souscription, et ainsi :
b) pour une nouvelle demande d'attribution d'un profil courant à un terminal courant et basée sur l'un des N codes d'activation dudit ensemble, le serveur de contrôle attribue le profil courant au terminal courant si :
- aucune association de ce terminal courant à un profil n'est enregistrée, et
- aucune association de ce profil courant à un terminal n'est enregistrée,
et enregistre l'association du profil courant, identifié parmi les N profils de la souscription, audit terminal courant.

Pour cette étape préalable, le serveur de contrôle peut communiquer avec une entité informatique comportant une interface homme/machine à disposition d'un client de cette souscription, pour recevoir du client au moins le nombre N de profils à attribuer à des terminaux respectifs du client. Le client peut recevoir à l'issue de cette étape les N codes d'activation lui permettant ensuite de solliciter des profils pour ses terminaux.

Dans une forme de réalisation, le serveur de contrôle peut rejeter la demande d'attribution du profil courant au terminal courant si une association de ce terminal courant à un profil a déjà été enregistrée préalablement. Néanmoins, comme indiqué ci-dessus, une telle réalisation admet une variante dans laquelle le profil précédemment associé pour ce terminal peut être désassocié, par exemple avec l'accord du client de la souscription, puis le nouveau profil demandé est attribué à ce terminal.

Dans une forme de réalisation, le serveur de contrôle rejette la demande d'attribution du profil courant au terminal courant si une association de ce profil courant à un terminal a déjà été enregistrée préalablement. L'identification du profil courant peut être effectuée auprès du serveur de contrôle, par exemple en fonction du code d'activation. Là encore, une telle réalisation admet une variante dans laquelle le profil précédemment associé à un autre terminal peut être désassocié, par exemple avec l'accord du client de la souscription, puis ce profil courant demandé est attribué au terminal courant avec l'accord du client de la souscription.

Comme détaillé plus loin, après saisie d'un code d'activation courant auprès d'un terminal, le serveur de contrôle, dans une réalisation, reçoit de ce terminal au moins une donnée (appelée « MatchingID ») correspondant au code d'activation courant et permettant au serveur de contrôle de vérifier si un profil correspondant au code d'activation courant a déjà été associé à un terminal. Une telle réalisation permet à titre d'exemple de contrôler si un profil ainsi identifié (par la donnée correspondant au code d'activation) a déjà été attribué à un terminal.

Par ailleurs, dans une réalisation :
- après saisie du code d'activation courant auprès du terminal courant, le serveur de contrôle reçoit de ce terminal courant au moins un identifiant de module de sécurité associé au terminal, et
- vérifie si un profil parmi les N profils a déjà été attribué pour un terminal ayant ledit identifiant de module de sécurité.

Une telle réalisation permet alors en outre de vérifier si un terminal donné s'est déjà fait attribuer un profil.

L'invention trouve une application avantageuse aux cas dans lesquels les modules de sécurité des terminaux sont des modules logiciels implantés directement dans les terminaux respectifs. En effet, habituellement, une carte SIM physique est pré-associée à un profil donné, mais tel n'est pas le cas avec les terminaux à module logiciel e-SIM intégrés.

Par ailleurs, le serveur de contrôle opérant ces vérifications, notamment dans un système d'information d'un opérateur auprès duquel est souscrite l'offre, est avantageux car les activations et installations de profils sont opérés habituellement par des serveurs d'accès de type SMDP ou SMDP+. Ainsi, dans une telle réalisation, des données du terminal courant reçues auprès du serveur de contrôle, avant l'attribution d'un profil à ce terminal, transitent via un tel serveur d'accès.

De même, des données d'installation d'un profil auprès d'un terminal, sont, dans une telle réalisation, émises par le serveur de contrôle et transmises au terminal via un tel serveur d'accès.

La présente invention vise aussi un programme informatique selon la revendication 10 comportant des instructions pour la mise en œuvre du procédé ci-avant, lorsque ce programme est exécuté par un processeur.

La présente invention vise aussi un serveur de contrôle, selon la revendication 11 comportant au moins un circuit de traitement pour exécuter les étapes du procédé ci-avant.

Le serveur de contrôle peut comporter en outre une interface de communication avec un serveur d'accès (type SMDP+ par exemple), et éventuellement aussi une interface de communication avec une entité informatique incluant une interface homme/machine à disposition d'un client de la souscription pour enregistrer au moins un nombre N de profils associés à la souscription et à attribuer.

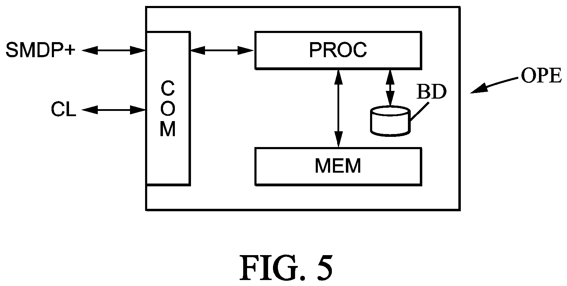

Comme illustré sur la figure 5 à titre d'exemple, le serveur de contrôle OPE pour la mise en œuvre du procédé ci-avant, peut inclure par exemple :
- une interface COM de communication avec le serveur d'accès (SMDP+ par exemple), ainsi qu'avec le client pour recevoir la commande multi-SIM,
- une unité mémoire MEM stockant des instructions d'un programme informatique au sens de l'invention, ainsi qu'une connexion à une base de données BD stockant notamment les enregistrements d'associations de profils/terminaux, et
- un circuit de traitement comportant par exemple un processeur PROC et coopérant avec la mémoire de travail MEM et la base de données BD, pour l'exécution du procédé décrit ci-avant.

D'autres avantages et caractéristiques de l'invention apparaîtront à la lecture des exemples de réalisation présentés dans la description détaillée ci-après, et à l'examen des dessins annexés sur lesquels :
- la figure 1 illustre une opération globale de définition d'une offre multi-Sim par un client CL et son traitement auprès d'un serveur OPE au sens de l'invention ;
- la figure 2 illustre une opération globale d'attribution d'un profil particulier à un terminal TER ;
- la figure 3 illustre un premier cas de rejet d'une demande d'attribution de profil, si ce profil a déjà été attribué ;
- la figure 4 illustre un deuxième cas de rejet d'une demande d'attribution de profil à un terminal, si un profil a déjà été attribué à ce terminal ;
- la figure 5 présentée ci-avant illustre schématiquement la structure matérielle d'un exemple de serveur de contrôle.

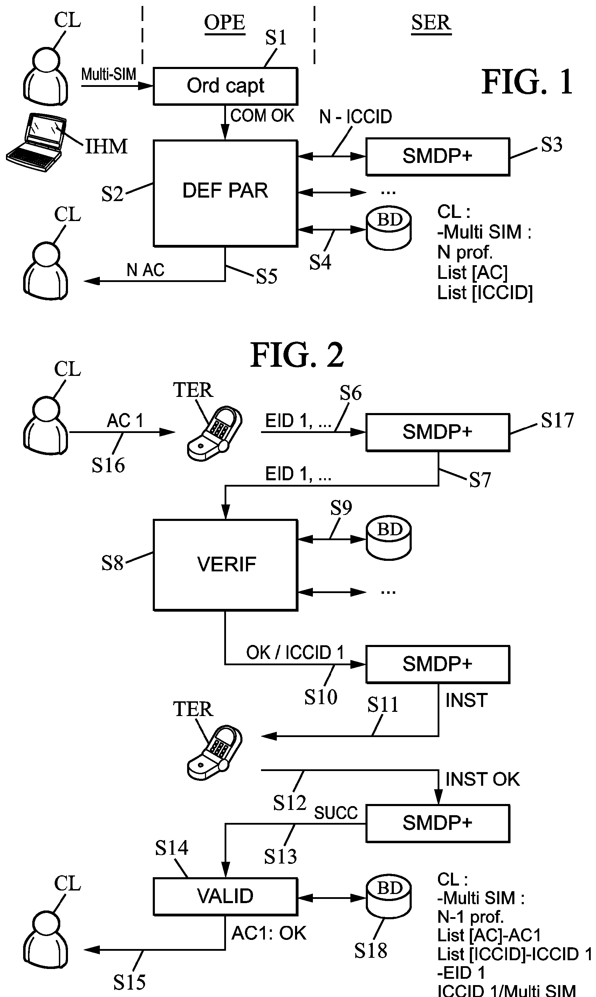

La présente invention propose un traitement efficace pour réaliser des contrôles de cohérence de téléchargements de profil(s). Les travaux de normalisation de l'association GSMA n'ont pas proposé de piste pour contrôler les téléchargements de profils, notamment dans le cas d'une offre multi-SIM. Il est alors proposé d'exploiter en particulier la capacité de contrôle du téléchargement de profil et des comptes rendus d'installation, qu'offrent notamment les architectures eSIM en cours de standardisation, pour définir la construction d'un référentiel (comme présenté ci-après en référence à la figure 1) pour chaque client dont les données d'information permettent de mettre en œuvre les étapes de contrôle, présentées en référence à la figure 2 notamment. Un profil d'accès correspond à un ensemble de données et d'applications qui permettent à un terminal mobile, une fois le profil activé, d'accéder au réseau d'un opérateur.

Dans la suite de la description, on présente des exemples de plusieurs modes de réalisation s'appliquant à un module de sécurité de type carte eUICC tel qu'en cours de normalisation dans le cadre de l'association GSMA, mais le procédé de gestion s'applique également à d'autres types de module de sécurité. Plus généralement, le module de sécurité est une plateforme dédiée inviolable, comprenant du matériel et du logiciel, apte à héberger de manière sécurisée des applications et leurs données confidentielles et cryptographiques et fournissant un environnement d'exécution d'applications sécurisé, par exemple une carte de type UICC.

Le module de sécurité est typiquement une carte de type « eUICC » (de l'anglais « embedded Universal Integrated Circuit Card »), également appelée « eSIM » (de l'anglais « embedded Subscriber Identity Module »), ou carte SIM inamovible. Aucune limitation n'est attachée à ce type de carte. Dans un mode de réalisation particulier, le module de sécurité est une carte à puce avec un système d'exploitation offrant les fonctionnalités d'une carte de type eUICC. Dans un autre mode de réalisation particulier, le module de sécurité est intégré dans le terminal formant ainsi une seule entité.

La description qui suit se place dans le contexte des spécifications techniques, telles que définies par l'association GSMA. Plus précisément, l'architecture de la gestion de configuration à distance est définie dans la spécification technique « RSP Architecture », version 1.0, datée du 23 décembre 2015 et les procédures sont définies dans la spécification technique « SGP.22 - RSP Technical Specification » v.1.1 datée du 9 juin 2016.

Dans le contexte du cas d'usage présenté ici, le client CL dispose d'un nombre N de terminaux (smartphones, et/ou tablette, etc., adaptés pour des applications de téléphonie ou plus généralement de communication utilisant un processeur de sécurité, de type carte SIM, ou module eSIM). Le client CL souscrit à une offre multi-SIM pour l'ensemble de ses N terminaux, et doit renseigner le profil de chaque terminal de son offre. Comme décrit plus loin, cette définition des profils s'effectue par une interaction entre l'utilisateur client CL (ou une interface homme/machine IHM (figure 1) à disposition de l'utilisateur) et un serveur de contrôle OPE connecté à un système d'information de l'opérateur auprès duquel est souscrite l'offre multi-SIM. Une contrainte technique s'impose en outre : tant qu'aucun profil n'est installé dans un terminal TER, ce dernier ne peut communiquer qu'avec un serveur d'accès SER (appelé serveur SMDP dans la norme GSMA actuelle, ou SMDP+ ci-après), mais ne peut pas communiquer directement avec le système d'information de l'opérateur. Néanmoins, comme décrit plus loin, le serveur SER peut effectuer une préparation des données de gestion de souscription, en coopération avec le serveur de contrôle OPE.

En référence à la figure 1, le client CL communique avec le serveur de contrôle OPE ou plus généralement avec le système d'information de l'opérateur (via une interface IHM) pour solliciter une offre multi-SIM. A l'étape S1, le système d'information saisit cette commande et après validation la transmet au serveur de contrôle OPE. A l'étape S2, le serveur de contrôle OPE définit les paramètres associés à cette commande, avec notamment :
- le nombre N de terminaux dont des profils respectifs sont à attribuer,
- la liste des N identifiants de profil ICCID, réservés pour ces N profils,
- la liste des N codes d'activation AC à utiliser pour chaque terminal pour pouvoir télécharger un profil correspondant en se connectant au serveur SER.

Il est bien entendu que la liste des informations ci-dessus n'est pas exhaustive.

Ces données peuvent être stockées à l'étape S4 dans une base de données BD connectée au serveur de contrôle OPE.

A l'étape S3, les N identifiants ICCID, en correspondance des codes d'activation AC sont transmis au serveur SER pour être reconnus ultérieurement, notamment pour l'opération globale d'attribution de profil présentée plus loin en référence à la figure 2.

A l'issue de cette première opération globale illustrée sur la figure 1, pour chaque client CL, il peut être défini une offre multi-SIM et un ensemble de terminaux du client, dont les paramètres présentés ci-après sont stockés à l'étape S4 dans la base BD. A l'étape S5, le serveur de contrôle OPE transmet les N codes d'activation AC pour associer N profils aux N terminaux respectifs au client CL.

Tel que défini au paragraphe 4.1 de la spécification technique SG.22, un code d'activation AC correspond à une chaîne de caractères et comprend différents éléments d'information séparés par un caractère « $ ». Le code d'activation AC comprend notamment :
- une adresse du serveur SER (serveur SMDP+ ici) qu'un terminal peut contacter pour télécharger le profil à installer dans ce terminal (et éventuellement un identifiant du serveur SMDP+), et
- une donnée relative au code d'activation, typiquement une donnée dite « MatchingID », permettant au serveur de contrôle OPE de vérifier s'il correspond bien un code d'activation valide à cette donnée MatchingID, et s'il est bien rattaché à ce code d'activation une offre d'un profil à attribuer, comme on le verra plus loin.

L'ordre de commande multi-SIM est saisi auprès du serveur de contrôle OPE, par exemple intégré au système d'information de l'opérateur, à l'étape S1, et par exemple validé à l'étape S2, puis transmis au serveur SMDP+ (référencé SER sur la figure 1) pour une activation de N profils à l'étape S3. Le serveur SER fournit au serveur OPE N codes d'activation AC correspondant à cette activation de N profils respectifs et le serveur OPE transmet ces N codes au client CL à l'étape S5 pour que ce dernier CL puisse choisir ensuite les profils à attribuer à l'ensemble de ses N terminaux respectifs.

L'offre multi-SIM est alors définie, dans un exemple de réalisation, notamment par :
- le nombre total N de profils autorisés pour cette offre, et donc de processeurs de sécurité pour cette offre (comprenant donc le nombre N1 total de cartes physiques SIM et N2 de modules logiciels eSIM),
- la liste des profils déjà alloués à ces cartes SIM et modules eSIM (ICCID-L),
- la liste des profils pré-alloués et non encore attribués (ICCID-P),
- la liste des N codes d'activation AC à utiliser pour chaque terminal.

Pour chaque terminal du client, il est répertorié en outre :
- optionnellement un identifiant IMEI du terminal,
- ou un identifiant EID de processeur de sécurité intégré dans le cas d'un module eSIM,
- et pour chaque profil installé :
   ▪ l'identité du profil, définie par l'identifiant ICCID, étant par ailleurs prévu que si l'EID ou l'IMEI n'est pas encore défini (car par exemple le terminal dans lequel le profil est à télécharger n'est pas encore déterminé), alors l'ICCID peut, dans un exemple de réalisation, remplacer l'enregistrement de l'identifiant d'e-SIM,
   ▪ l'offre à laquelle ce profil est rattaché,
   ▪ un état d'installation du profil : « en cours » ou « installé » (pour les modules eSIM en particulier).

Le serveur OPE est alors capable d'effectuer des contrôles par exemple lors de la réception d'une demande préalable pour obtenir une autorisation au téléchargement du profil (début des étapes de la figure 2 commentée plus loin), ou encore sur réception d'une installation d'un profil (suite des étapes de la figure 2).

En référence à la figure 2, le client CL saisit, sur un terminal TER de son choix parmi un ensemble de N terminaux, un premier code d'activation AC1 à l'étape S16. Il s'agit de l'un des N codes d'activation que le client CL a reçu à l'étape S5. En réponse à l'introduction de ce code AC1, le terminal TER se connecte au serveur SER et transmet au serveur SER, à l'étape S6, une donnée MatchingID relative à ce code d'activation AC1, avec en outre l'identifiant EID1 de module e-SIM que comporte le terminal (sans carte SIM physique dans l'exemple représenté).

A l'étape S17, le serveur SER peut, en fonction de la donnée MatchingID correspondant à ce code d'activation AC1, retrouver un identifiant de profil ICCID prévu (aux étapes S2 et S3 préalables) pour ce code d'activation AC1. A l'étape S7, le server SER transmet ces données (EID1, MatchingID, ICCID) au serveur de contrôle OPE, lequel, à l'étape S8 vérifie ces données pour autoriser le téléchargement d'un profil. Par exemple, à l'étape S7, un serveur SER de type SMDP+ peut préciser le MatchingID, l'identifiant EID, l'identifiant de profil ICCID que le serveur SER a reçu préalablement à l'étape S3, et éventuellement en outre (selon la configuration ou les capacités du serveur SMDP+) un identifiant de contexte de demande de profil.

Le serveur de contrôle OPE, à l'étape S8, peut exploiter la donnée MatchingID, et/ou encore l'identifiant ICCID, et/ou encore l'identifiant de contexte pour retrouver le contexte du traitement demandé.

A cette étape S8, le serveur de contrôle OPE valide l'activation déterminée par la donnée MatchingID, ou rejette l'activation si nécessaire (comme présenté plus loin), lorsque l'activation est périmée (par exemple en raison d'un code d'activation déjà utilisé), ou autre.

Pour ce faire, à l'étape S9, le serveur de contrôle OPE accède au référentiel du client dans la base BD et recherche l'identifiant EID1 du module e-SIM du terminal TER.

Si l'identifiant EID1 est déjà référencé dans la base, le serveur de contrôle OPE recherche l'offre à laquelle est associée l'identifiant de profil ICCID reçu.

Le serveur de contrôle OPE recherche ensuite si, sous l'enregistrement de l'identifiant EID1, il est déjà répertorié un profil attribué, dont l'offre rattachée est identique à l'offre dont le profil est l'objet de la présente demande de téléchargement.

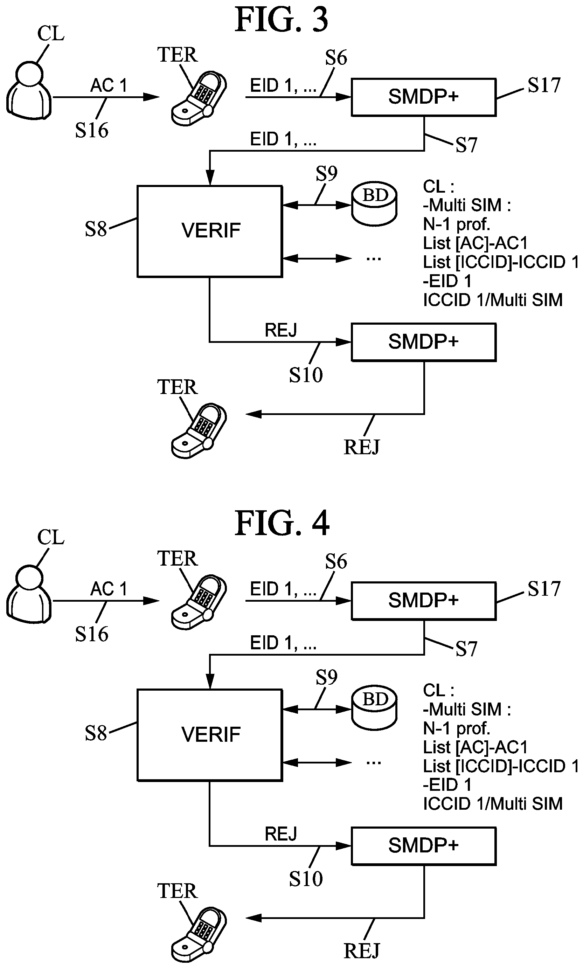

Si un tel profil existe déjà et a donc été déjà attribué, alors la demande de téléchargement est rejetée. Sinon, la demande de téléchargement est autorisée. Dans ce dernier cas (si la demande est autorisée), alors l'identifiant de profil ICCID présenté par le serveur SMDP+ est référencé dans la base BD comme étant un profil attribuable. Ainsi, une future demande de profil basée sur le même identifiant EID1 ou le même identifiant ICCID pourra être rejetée, comme on le verra plus loin en référence aux figures 3 et 4.

Dans ce cas encore (si la demande est autorisée), il est prévu optionnellement un état du processus d'attribution de profil qui est alors positionné à « en cours d'attribution ». Dans ce cas encore (si l'identifiant EID-1 n'est pas référencé comme ayant un profil associé attribué), l'autorisation est donnée et :
- l'identifiant de module e-SIM EID-1 est enregistré dans la base BD comme ayant une attribution de profil en cours,
- l'identifiant ICCID est enregistré en tant qu'identifiant de profil candidat ICCID1 en cours d'attribution, et
- à l'étape S10, le serveur de contrôle OPE transmet au serveur SER une autorisation de téléchargement de profil ayant l'identifiant ICCID (correspondant à l'identifiant ICCID1 référencé maintenant dans la base BD).

Sur réception de cet accord, le serveur SER transmet effectivement les données de ce profil au terminal TER à l'étape S11 en vue de son installation dans le terminal TER. Une fois l'installation réussie, le terminal envoie à l'étape S12 un message de succès au serveur SER, lequel transmet ce message au serveur de contrôle OPE à l'étape S13.

Plus particulièrement, à l'étape S13, le serveur SER précise la donnée MatchingID, l'identifiant ICCID-1, l'identifiant EID-1, et éventuellement un identifiant de contexte au serveur de contrôle OPE (par exemple : profil « en cours d'attribution »). Le serveur de contrôle OPE, avec ces données, exploite la donnée de MatchingID, ou l'identifiant ICCID-1, ou encore l'identifiant de contexte pour retrouver le contexte du traitement demandé, et accède à l'étape S14 à la base de données BD au référentiel du client pour rechercher l'offre à laquelle est associée l'identifiant ICCID-1 reçu et poursuivre les étapes habituelles de validation/installation de profil/association d'un compte de facturation, etc. L'état du processus est alors positionné à « profil installé » dans la base BD à l'étape S18. Par ailleurs, le nombre de profils restant à attribuer est décrémenté, ainsi que la liste des codes d'activation utilisables (AC1 en étant ôté) et la liste des identifiants de profils attribuables ICCID-P (l'identifiant ICCID1 en étant ôté). L'identifiant ICCID1 est ajouté à la liste des identifiants de profils déjà alloués ICCID-L. A l'étape S15, le serveur de contrôle OPE transmet un message de validation d'installation du profil sur le terminal TER au client CL (possiblement via le terminal TER lui-même).

Ainsi, en référence à la figure 3, lors de l'étape S8, le serveur de contrôle OPE rejette l'activation si un code d'activation AC1 a déjà été employé pour le téléchargement précédent d'un profil d'identifiant ICCID1. La demande d'attribution de profil est rejetée, ici. A l'étape S10, le serveur de contrôle OPE transmet au serveur SER un rejet de téléchargement de profil ayant l'identifiant ICCID1. Le serveur SER notifie le terminal du client CL de ce rejet. On relèvera dans l'exemple illustré sur la figure 3 que le terminal est de même identifiant e-SIM (EID1) que celui auquel est attribué le profil ICCID1. Toutefois, dans une réalisation possible, la présentation d'un code d'activation AC1 pour un nouveau terminal d'identifiant EID2 peut permettre d'attribuer le profil ICCID1 au nouveau terminal EID2. Dans ce cas, l'association du profil ICCID1 au terminal EID1 est supprimée du référentiel client CL et plus généralement de la base BD.

Par ailleurs, en référence maintenant à la figure 4, lors de l'étape S8, le serveur de contrôle OPE rejette l'activation s'il est recherché à attribuer un profil (avec un nouveau code d'activation AC2, différent du code AC1) à un terminal ayant un identifiant e-SIM EID1 qui est déjà associé à un profil ICCID1 déjà attribué à ce terminal, alors la demande d'attribution du nouveau profil est rejetée. A l'étape S10, le serveur de contrôle OPE transmet au serveur SER un rejet de téléchargement de profil ayant l'identifiant ICCID1. Le serveur SER notifie le terminal du client CL de ce rejet. Dans ce cas par exemple, le serveur de contrôle OPE peut chercher à contacter l'utilisateur CL pour qu'il confirme son choix de désassocier en particulier ce terminal du profil ICCID1 et marquer son accord pour lui associer plutôt un nouveau profil ICCD2. Dans ce cas encore, le profil ICCID1 peut devenir à nouveau disponible dans l'offre multi-SIM du client CL pour être affecté à un autre terminal EID2.

Bien entendu, la présente invention ne se limite pas aux formes de réalisation décrites ci-avant à titre d'exemple ; elle s'étend à d'autres variantes.

Ainsi par exemple, dans une forme de réalisation possible, il peut être prévu l'emploi d'une sonde par exemple pour obtenir une information d'identifiant du terminal lui-même (type IMEI, ou l'identifiant IMSI stocké dans la carte SIM). Par exemple, l'identifiant IMSI peut être exploité par le serveur de contrôle OPE pour retrouver le client CL, l'offre associée et l'identifiant ICCID auquel le terminal a été associé. Par exemple, le serveur de contrôle OPE peut rechercher l'identifiant ICCID dans l'ensemble de la base BD globalement (tous les clients). Si un enregistrement d'identifiant ICCID est trouvé et est associé au même identifiant de terminal IMEI (IMSI ou EID) que celui indiqué, alors le traitement s'interrompt et il n'y a pas lieu de mettre à jour la base de données. Sinon, une mise à jour peut être opérée.

Par ailleurs, dans les exemples de réalisation présentés ci-avant, l'information d'un identifiant IMEI ou IMSI est avantageuse mais n'est pas nécessaire, dès lors notamment que l'identifiant EID peut être obtenu en particulier pour des terminaux à modules e-SIM intégrés.

Par ailleurs, on a décrit ci-avant la possibilité de stocker le nombre total N de profils autorisés pour une offre, et donc de processeurs de sécurité pour cette offre (comprenant alors un nombre N1 total de cartes physiques SIM et un nombre N2 de modules logiciels eSIM, avec N=N1+N2). Il peut être avantageux d'ailleurs de compter en outre, dans une réalisation optionnelle :
- le nombre m2 de modules eSIM déjà livrés, et
- le nombre m1 de cartes SIM déjà livrées.

Ainsi, le serveur de contrôle OPE peut gérer les demandes de téléchargement ou de cartes SIM délivrées. Le serveur de contrôle OPE est capable de garder une trace, sous la forme de tels compteurs ml, m2, des diverses attributions afin de garantir que le nombre N de profils total n'est pas dépassé.

Une telle réalisation est avantageuse notamment dans le cadre d'une évolution des terminaux à module e-SIM intégré, mais dits « hybrides » car dans lesquels une carte SIM physique peut être insérée. Un traitement complémentaire peut être mis en œuvre pour référencer le profil d'une telle carte SIM insérée, dans le référentiel de l'offre prévu pour les modules eSIM associés à l'offre, et ce afin d'offrir une information complète sur les profils et terminaux détenus par chaque client d'une offre (notamment auprès de services supports).

Ainsi, le référentiel permet non seulement de savoir gérer les cas d'incohérence mais offre une vue sur ce que détient et ce qui est installé chez le client, afin d'être en capacité d'offrir un support de qualité.

Les principes de ce traitement complémentaire peuvent s'appuyer par exemple sur la détection du couple d'identifiants IMEI /IMSI (une sonde peut répondre à ce besoin, d'autres solutions existent également). L'identifiant de terminal IMEI détecté permet en effet d'identifier le terminal dans lequel une carte SIM est insérée. L'identifiant de carte IMSI détecté permet à l'opérateur de retrouver le profil actif, d'identifiant ICCID, auquel appartient cet identifiant IMSI. Cette information permet également d'identifier l'offre à laquelle ce profil a été attribué et donc d'identifier le client. La connaissance du profil (d'identifiant ICCID) permet de distinguer le profil appartenant à une carte SIM de celui appartenant à un module eSIM. Seul le profil d'une carte SIM est retenu pour la suite du traitement complémentaire dont le principe est décrit ci-après.

L'identifiant ICCID est rattaché à l'offre du client dans le référentiel. On enregistre sa valeur en correspondance de l'offre détenue par le client (si cela n'a pas été le cas déjà auparavant). Si cet identifiant ICCID est déjà référencé, alors on vérifie que la valeur de l'IMEI enregistrée correspond à celle détectée. Si tel est déjà le cas, alors le référentiel est déjà à jour. Sinon, on modifie cette valeur d'IMEI par la valeur nouvellement détectée (par la sonde précitée par exemple).

Si la mise à jour de l'identifiant IMEI a été nécessaire, alors il est supposé que la SIM a été introduite dans un nouveau terminal, et il faut donc effacer l'éventuelle référence ICCID stockée en correspondance d'un autre identifiant de terminal IMEI (qui *de facto* n'est plus à jour pour cette carte SIM).

Il convient donc de rechercher cet identifiant IMEI dans le référentiel des clients et de vérifier que l'on trouve une correspondance avec un profil de carte SIM différent du profil qui a été détecté. Dans ce cas, la valeur de l'identifiant ICCID contenue dans le référentiel trouvé et correspondant à la valeur détectée peut être simplement effacée.

## Revendications

1. Procédé, mis en œuvre par un serveur de contrôle (OPE), de configuration d'un module de sécurité associé à un terminal de télécommunication, dans lequel le serveur de contrôle (OPE) attribue au préalable un ensemble de N codes d' activation (AC1, AC2, ...) correspondant à une souscription comprenant une pluralité de N profils à attribuer à un ensemble de N terminaux respectifs, chacun des N codes d'activation (AC1, AC2, ...) comprenant une adresse d'un serveur d'accès (SER) à contacter pour télécharger un profil à installer, le procédé comportant les étapes :
a) après activation d'un premier code (AC1) auprès d'un premier terminal (EID1), à l'aide d'une donnée MatchingID correspondant au premier code (AC1) d'activation reçue du premier terminal (EID1), attribuer un profil (ICCID1) au premier terminal et enregistrer une association du profil attribué (ICCID1) au premier terminal (EID1),
b) pour une nouvelle demande d'attribution d'un profil courant à un terminal courant, à l'aide d'une donnée MatchingID correspondant à un code d'activation (AC), et d'un identifiant EID d'un module de sécurite (e-SIM) que comporte le terminal courant reçues du terminal courant attribuer le profil courant au terminal courant si :
- aucune association de ce terminal courant à un profil (ICCID) n'est enregistrée parmi une liste de profils (ICCID-L), et
- aucune association de ce profil courant (ICCID) à un terminal (TER) n'est enregistrée parmi un ensemble de N terminaux,
et enregistrer l'association du profil courant au terminal courant, et dans lequel, avant l'attribution d'un profil à ce terminal, courant lesdites données du terminal courant EID et MatchingID relatives à ladite nouvelle demande d'attribution sont reçues auprès du serveur de contrôle (OPE) en transitant via le serveur d'accès (SER),
et, lorsque le profil courant est attribué au terminal courant, des données d'installation du profil courant sont transmises au terminal courant par ledit serveur d'accès (SER).

2. Procédé selon la revendication 1, dans lequel le serveur de contrôle (OPE) rejette la demande d'attribution du profil courant au terminal courant si une association de ce terminal courant à un profil est déjà enregistrée.

3. Procédé selon l'une des revendications 1 et 2, dans lequel le serveur de contrôle (OPE) rejette la demande d'attribution du profil courant au terminal courant si une association de ce profil courant à un terminal est déjà enregistrée.

4. Procédé selon l'une des revendications précédentes, dans lequel la souscription comprenant une pluralité de N profils à attribuer à un ensemble de N terminaux respectifs est relative à une offre de type multi-SIM.

5. Procédé selon l'une des revendications précédentes, comportant, préalablement à l'étape a), l'enregistrement de N profils (List1ICCIDD) et N codes d'activation (List1ACD), en association avec ladite souscription (Multi-SIM), et dans lequel :
b) pour une nouvelle demande d'attribution d'un profil courant à un terminal courant et basée sur l'un des N codes d'activation dudit ensemble, le serveur de contrôle attribue le profil courant au terminal courant si :
- aucune association de ce terminal courant à un profil n'est enregistrée, et
- aucune association de ce profil courant à un terminal n'est enregistrée, et enregistre l'association du profil courant, identifié parmi les N profils de la souscription, audit terminal courant.

6. Procédé selon la revendication 5, dans lequel le serveur de contrôle communique avec une entité informatique comportant une interface homme/machine à disposition d'un client (CL) de ladite souscription, pour recevoir du client au moins le nombre N de profils à attribuer à des terminaux respectifs du client.

7. Procédé selon l'une des revendications précédentes, dans lequel :
- après saisie du code d'activation courant auprès du terminal courant, le serveur de contrôle reçoit de ce terminal courant au moins ledit identifiant (EID) du module de sécurité (e-SIM) associé au terminal, et
- vérifie si un profil (ICCID) parmi les N profils a déjà été attribué pour un terminal ayant ledit identifiant (EID) de module de sécurité.

8. Procédé selon l'une des revendications précédentes, dans lequel le module de sécurité est un module logiciel implanté directement dans le terminal.

9. Procédé selon l'une des revendications précédentes, dans lequel, après saisie d'un code d'activation courant auprès d'un terminal, le serveur de contrôle reçoit de ce terminal au moins ladite donnée MatchingID correspondant au code d'activation courant et vérifie si un profil (ICCID) correspondant au code d'activation courant a déjà été associé à un terminal.

10. Programme informatique **caractérisé en ce qu'**il comporte des instructions pour la mise en œuvre du procédé selon l'une des revendications 1 à 9, lorsque ce programme est exécuté par un processeur.

11. Serveur de contrôle, **caractérisé en ce qu'**il comporte au moins un circuit de traitement pour exécuter les étapes du procédé selon l'une des revendications 1 à 9.

12. Serveur selon la revendication 10, **caractérisé en ce qu'**il comporte en outre une interface de communication avec un serveur d'accès (SER).

13. Serveur selon l'une des revendications 11 et 12, **caractérisé en ce qu'**il comporte une interface de communication avec une entité informatique incluant une interface homme/machine à disposition d'un client de la souscription pour enregistrer au moins un nombre N de profils associés à la souscription et à attribuer.

## Patentansprüche

1. Verfahren, das von einem Steuerserver (OPE) implementiert wird, zum Konfigurieren eines Sicherheitsmoduls, das einem Telekommunikationsendgerät zugeordnet ist, wobei der Steuerserver (OPE) vorab eine Menge von N Aktivierungscodes (AC1, AC2,...) zuweist, die einem Abonnement entsprechen, das eine Mehrzahl von N Profilen umfasst, die einer Menge von N jeweiligen Endgeräten zuzuweisen sind, wobei jeder der N Aktivierungscodes (AC1, AC2, ...) eine Adresse eines Zugangsservers (SER) umfasst, der zu kontaktieren ist, um ein zu installierendes Profil herunterzuladen, wobei das Verfahren die folgenden Schritte umfasst:
a) nach Aktivierung eines ersten Codes (AC1) an einem ersten Endgerät (EID1), mithilfe eines dem ersten Aktivierungscode (AC1) entsprechenden Datenelements MatchingID, das von dem ersten Endgerät (EID1) empfangen wird, Zuweisen eines Profils (ICCID1) zu dem ersten Endgerät und Registrieren einer Zuordnung des zugewiesenen Profils (ICCID1) zu dem ersten Endgerät (EID1),
b) bei einer neuen Anforderung zur Zuweisung eines aktuellen Profils zu einem aktuellen Endgerät, mithilfe eines einem Aktivierungscode (AC) entsprechenden Datenelements MatchingID und einer Kennung EID eines Sicherheitsmoduls (e-SIM), welches das aktuelle Endgerät umfasst, die von dem aktuellen Endgerät empfangen werden, Zuweisen des aktuellen Profils zu dem aktuellen Endgerät, wenn:
- keine Zuordnung dieses aktuellen Terminals zu einem Profil (ICCID) in einer Profilliste (ICCID-L) registriert ist, und
- keine Zuordnung dieses aktuellen Profils (ICCID) zu einem Terminal (TER) aus einer Menge von N Endgeräten registriert ist,
und Registrieren der Zuordnung des aktuellen Profils zu dem aktuellen Endgerät,
und wobei, vor dem Zuweisen eines Profils zu diesem aktuellen Endgerät, die Datenelemente EID und MatchingID des aktuellen Endgeräts bezüglich der neuen Anforderung zur Zuweisung bei dem Steuerserver (OPE) empfangen werden, wobei sie über den Zugangsserver (SER) verlaufen, und, wenn das aktuelle Profil dem aktuellen Endgerät zugewiesen ist, Installationsdatenelemente des aktuellen Profils durch den Zugangsserver (SER) an das aktuelle Endgerät übertragen werden.

2. Verfahren nach Anspruch 1, wobei der Steuerserver (OPE) die Anforderung zur Zuweisung des aktuellen Profils zu dem aktuellen Endgerät zurückweist, wenn eine Zuordnung dieses aktuellen Endgeräts zu einem Profil bereits registriert ist.

3. Verfahren nach einem der Ansprüche 1 und 2, wobei der Steuerserver (OPE) die Anforderung zur Zuweisung des aktuellen Profil zu dem aktuellen Endgerät zurückweist, wenn eine Zuordnung dieses aktuellen Profils zu einem Endgerät bereits registriert ist.

4. Verfahren nach einem der vorhergehenden Ansprüche, wobei sich das Abonnement, das eine Mehrzahl von N Profilen umfasst, die einer Menge von N jeweiligen Endgeräten zuzuweisen sind, auf ein Multi-SIM-Angebot bezieht.

5. Verfahren nach einem der vorhergehenden Ansprüche, das vor dem Schritt a) das Registrieren von N Profilen (List1ICCIDD) und N Aktivierungscodes (List1ACD) unter Zuordnung zu dem Abonnement (Multi-SIM) umfasst und bei dem:
b) bei einer neuen Anforderung zur Zuweisung eines aktuellen Profils zu einem aktuellen Endgerät, die auf einem der N Aktivierungscodes der Menge basiert, der Steuerserver dem aktuellen Endgerät das aktuelle Profil zuweist, wenn:
- keine Zuordnung dieses aktuellen Terminals zu einem Profil registriert ist, und
- keine Zuordnung dieses aktuellen Profils zu einem Endgerät registriert ist,
und die Zuordnung des aktuellen Profils, das unter den N Profilen des Abonnements identifiziert wird, zu dem aktuellen Endgerät registriert wird.

6. Verfahren nach Anspruch 5, wobei der Steuerserver mit einer Computerentität kommuniziert, die eine Mensch/Maschine-Schnittstelle umfasst, die einem Kunden (CL) des Abonnements zur Verfügung steht, um von dem Kunden mindestens die Anzahl N von Profilen zu empfangen, die jeweiligen Endgeräten des Kunden zuzuweisen sind.

7. Verfahren nach einem der vorhergehenden Ansprüche, wobei:
- nach dem Eingeben des aktuellen Aktivierungscodes an dem aktuellen Endgerät der Steuerserver von diesem aktuellen Endgerät mindestens die Kennung (EID) des dem Endgerät zugeordneten Sicherheitsmoduls (e-SIM) empfängt, und
- überprüft, ob ein Profil (ICCID) unter den N Profilen bereits einem Endgerät mit der Kennung (EID) des Sicherheitsmoduls zugewiesen worden ist.

8. Verfahren nach einem der vorhergehenden Ansprüche, wobei das Sicherheitsmodul ein in dem Endgerät direkt installiertes Softwaremodul ist.

9. Verfahren nach einem der vorhergehenden Ansprüche, wobei der Steuerserver, nach dem Eingeben eines aktuellen Aktivierungscodes an einem Endgerät, von diesem Endgerät mindestens das dem aktuellen Aktivierungscode entsprechende Datenelement MatchingID empfängt und überprüft, ob ein dem aktuellen Aktivierungscode entsprechendes Profil (ICCID) bereits einem Endgerät zugeordnet worden ist.

10. Computerprogramm, **dadurch gekennzeichnet, dass** es Anweisungen umfasst, die bei der Ausführung dieses Programms durch einen Prozessor das Verfahren nach einem der Ansprüche 1 bis 9 ausführen.

11. Steuerserver, **dadurch gekennzeichnet, dass** er mindestens eine Verarbeitungsschaltung zum Ausführen der Schritte des Verfahrens nach einem der Ansprüche 1 bis 9 umfasst.

12. Server nach Anspruch 10, **dadurch gekennzeichnet, dass** er ferner eine Schnittstelle zur Kommunikation mit einem Zugangsserver (SER) umfasst.

13. Server nach einem der Ansprüche 11 und 12, **dadurch gekennzeichnet, dass** er eine Schnittstelle zur Kommunikation mit einer Computerentität umfasst, die eine Mensch/Maschine-Schnittstelle beinhaltet, die einem Kunden des Abonnements zur Verfügung steht, um mindestens eine Anzahl N von dem Abonnement zugeordneten und zuzuweisenden Profilen zu registrieren.

## Claims

1. Method, implemented by a control server (OPE), for configuring a security module associated with a telecommunication terminal, wherein the control server (OPE) assigns, in advance, a set of N activation codes (AC1, AC2, ...) corresponding to a subscription comprising a plurality of N profiles to be assigned to a set of N respective terminals, each of the N activation codes (AC1, AC2, ...) comprising an address of an access server (SER) to be contacted in order to download a profile to be installed, the method comprising the steps of:
a) after a first code (AC1) has been activated at a first terminal (EID1), with the aid of a MatchingID datum corresponding to the first activation code (AC1) received from the first terminal (EID1), assigning a profile (ICCID1) to the first terminal and registering an association of the assigned profile (ICCID1) with the first terminal (EID1),
b) for a new request to assign a current profile to a current terminal, with the aid of a MatchingID datum corresponding to an activation code (AC), and an EID identifier of a security module (e-SIM) comprised by the current terminal, which are received from the current terminal, assigning the current profile to the current terminal if:
- no association of this current terminal with a profile (ICCID) is registered among a list of profiles (ICCID-L), and
- no association of this current profile (ICCID) with a terminal (TER) is registered among a set of N terminals, and registering the association of the current profile with the current terminal,
and wherein, prior to the assignment of a profile to this current terminal, said data of the current terminal EID and MatchingID relating to said new assignment request are received from the control server (OPE) by transiting via the access server (SER),
and, when the current profile is assigned to the current terminal, installation data of the current profile are transmitted to the current terminal by said access server (SER) .

2. Method according to Claim 1, wherein the control server (OPE) rejects the request to assign the current profile to the current terminal if an association of this current terminal with a profile is already registered.

3. Method according to either of Claims 1 and 2, wherein the control server (OPE) rejects the request to assign the current profile to the current terminal if an association of this current profile with a terminal is already registered.

4. Method according to one of the preceding claims, wherein the subscription comprising a plurality of N profiles to be assigned to a set of N respective terminals relates to an offer of multi-SIM type.

5. Method according to one of the preceding claims, comprising, prior to step a), the registration of N profiles (List1ICCIDD) and N activation codes (List1ACD), in association with said subscription (Multi-SIM), and wherein:
b) for a new request to assign a current profile to a current terminal and based on one of the N activation codes of said set, the control server assigns the current profile to the current terminal if:
- no association of this current terminal with a profile is registered, and
- no association of this current profile with a terminal is registered,
and registers the association of the current profile, identified among the N profiles of the subscription, with said current terminal.

6. Method according to Claim 5, wherein the control server communicates with a computer entity comprising a man/machine interface available to a client (CL) of said subscription, in order to receive from the client at least the number N of profiles to be assigned to respective terminals of the client.

7. Method according to one of the preceding claims, wherein:
- after the current activation code has been entered at the current terminal, the control server receives from this current terminal at least said identifier (EID) of the security module (e-SIM) associated with the terminal, and
- verifies whether a profile (ICCID) among the N profiles has already been assigned for a terminal having said security module identifier (EID).

8. Method according to one of the preceding claims, wherein the security module is a software module installed directly in the terminal.

9. Method according to one of the preceding claims, wherein, after a current activation code has been entered at a terminal, the control server receives from this terminal at least said MatchingID datum corresponding to the current activation code and verifies whether a profile (ICCID) corresponding to the current activation code has already been associated with a terminal.

10. Computer program, **characterized in that** it comprises instructions for implementing the method according to one of Claims 1 to 9 when this program is executed by a processor.

11. Control server, **characterized in that** it comprises at least one processing circuit for executing the steps of the method according to one of Claims 1 to 9.

12. Server according to Claim 10, **characterized in that** it further comprises an interface for communication with an access server (SER).

13. Server according to either of Claims 11 and 12, **characterized in that** it comprises an interface for communication with a computer entity including a man/machine interface available to a client of the subscription in order to register at least a number N of profiles associated with the subscription and to be assigned.
